# EUROPEAN PATENT SPECIFICATION

(11) **EP 2 438 282 B1**
(45) Date of publication and mention of the grant of the patent: **08.07.2015**
(21) Application number: 10723084.9
(22) Date of filing: 25.05.2010
(51) Int. Cl.: F02D 19/08, F02D 19/10, F02D 41/00

(54) **METHOD AND DEVICE FOR POWERING A DIESEL ENGINE WITH DUAL FUEL FEED**
VERFAHREN UND VORRICHTUNG FÜR DEN ANTRIEB EINES DIESELMOTORS MIT ZWEIFACHER KRAFTSTOFFZUFUHR
PROCÉDÉ ET DISPOSITIF POUR FOURNIR DEUX CARBURANTS À UN MOTEUR DIESEL

(30) Priority: 03.06.2009 IT MI20090968
(43) Date of publication of application: 11.04.2012
(73) Proprietor: Landi Renzo S.P.A., 42025 Cavriago (RE) (IT)
(72) Inventor: PIZZO, Franco, I-42124 Reggio Emilia (RE) (IT)
(74) Representative: Dondi, Silvia
(86) International application number: PCT/EP2010/057170
(87) International publication number: WO 2010/139572

(56) References cited:
- EP-A- 1 158 147
- WO-A-03/081009
- WO-A-2008/043323
- WO-A-2008/064415
- DE-A1-102007 017 561

## Description

The present invention relates to a method for powering a compression ignition engine, in particular a diesel engine, with dual fuel feed in the form of gasoil and gas, in particular methane, in accordance with the introduction to the main claim. The present invention also relates to a device for implementing said method in accordance with the corresponding independent claim. WO 03/081009 A1 discloses an example of such an engine.

A modem injection diesel engine is known to comprise a plurality of electro-injectors (hereinafter known simply as "injectors") associated with the cylinders and arranged to inject a diesel fuel, for example gasoil, into these latter. The injection operation is activated and controlled by an electronic control unit which, based on particular parameters, activates the injectors to introduce a predefined gasoil quantity into said cylinders in accordance with predefined injection phases. The parameters on the basis of which said control unit operates are usually the temperature of the engine coolant liquid, the distribution control phase and the engine r.p.m., the fuel temperature and pressure and the combustion air pressure. During normal engine operation, the control unit activates the injectors by means of an electrical command, the duration of which depends on the power required from the engine. This activation comprises a sequence of operating periods during which the gasoil is introduced into the cylinders. In particular, each period comprises at least one pilot injection phase (or simply "injection") and one main injection phase. In contrast to each pilot injection of predetermined duration, the main injection has a duration varying on the basis of the power required from the engine and is defined by the electronic control unit based on the engine load and on the aforesaid parameters (measured by suitable known sensors), and by the position of the accelerator pedal (this also measured by known sensors) and of other usual known variables related to the engine operation and measured in known manner.

Dual fuel feed diesel engines operating with gasoil and methane are known. However these engines do not provide for diesel injection by electro-injectors controlled by a control unit.

An object of the present invention is to provide a method and device enabling a latest generation diesel engine to be powered with dual fuel feed (mixture), namely gasoil and gas, in particular methane, in which the injectors are electro-injectors controlled by an electronic control unit.

A further object is to provide a method and device of the stated type which prevent any interruption in correct engine operation when powered by a gasoil/gas mixture. Another object is to provide a method and device of the stated type which enable the desired diesel engine performance to be also achieved when operating with a gasoil/gas mixture.

Another object is to provide a method and device of the stated type which enable dual fuel feed of the diesel engine to be achieved by simple and reliable means. These and other objects which will be apparent to the expert of the art are attained by a method and device in accordance with the accompanying claims.

The present invention will be more apparent from the accompanying drawings, which are provided by way of non-limiting example and in which:
Figure 1 shows a scheme of a device according to the invention applied to a diesel engine;
Figure 2 shows a graph indicating in simplified manner the modalities of the gasoil injection control phases in the engine plotted against time;
Figure 3 shows a block scheme of the device according to the invention;
Figure 4 shows a block scheme of the device of Figure 3 during the use of the engine with gasoil feed;
Figure 5 shows a block scheme of the device of Figure 3 during the use of the engine with feed in the form of a mixture of gasoil and gas;
Figure 6 shows a circuit schematic of the device shown in Figure 3;
Figure 7 shows a circuit schematic of a device representing a variant of the device of Figure 3;
Figure 8 shows a block scheme of another variant of the device of Figure 3; and
Figure 9 shows a circuit schematic of another variant of the device of Figure 3.

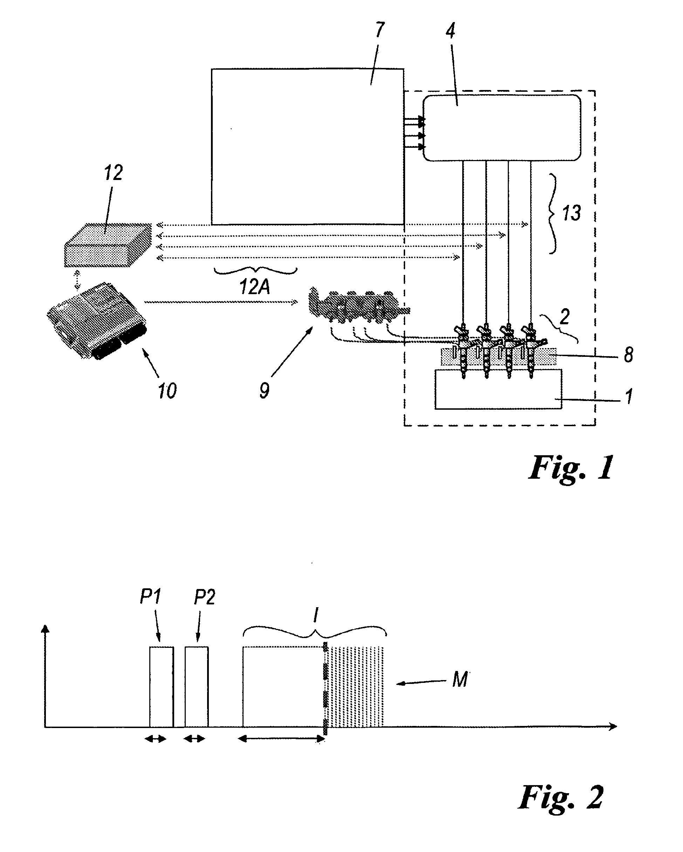

With reference to said figures, a diesel cycle engine 1 comprises a plurality of electro-injectors 2 (connected to a common header, not shown) for feeding gasoil (or equivalent fuel for operating a diesel cycle engine) into the engine cylinders. These electro-injectors (or simply "injectors"), of known electronically actuated type, operate under the control of an electronic control unit 4. This latter controls the operation or actuation of these injectors 2 on the basis of data related to the engine operation and reaching the control unit 4 from suitable known sensors (indicated by way of example by the block 7 in Figure 1), which measure various engine parameters (such as its r.p.m., the overpressure in the gasoil feed conduit, the timing control phase and the temperature of the cooling circuit fluid) and/or of other parts of the vehicle (such as the fuel temperature and pressure) These data, and the power requirement of an engine user, causes the control unit to define the modality of operation of the injectors.

At the injectors 2 an intake air manifold 8 is present, to which the gas, particularly methane, injectors 9 are connected, to feed this latter to the engine cylinders to enable them to operate with gas concurrently with operation with gasoil when dual fuel feed is required. The injectors 9 are connected to their own control unit 10 for controlling their actuation.

The gasoil feed takes place in accordance with precise modalities shown schematically in the graph of Figure 2. According to these modalities, each injection is commanded by the control unit 4 (or "diesel control unit") to execute at least one (two in Figure 2) pilot injection P1 (and P2 in Figure 2) of gasoil into the corresponding cylinder followed by a main injection I. The number and duration of these injections is not constant, but varies according to the engine operating point (engine operation condition, power, torque, engine r.p.m. etc.).

According to the invention, the device of the invention enables a latest generation diesel engine, with electronically controlled electro-injectors, to be transformed into a dual fuel engine fed either with gasoil or with a gasoil and methane mixture. This latter condition is achieved by the operation of the control unit 10 (to be known as the "gas control unit") which controls the gas injectors 9 and reduces the gasoil quantity injected by the intervention of suitable reducer means. The command to the gas injectors 9 results in methane being injected into the manifold 8, then in the first useful intake phase following this injection the gas is fed into the cylinders and is present in them at least during the main injection and possibly even during at least one of its pilot injections.

More particularly, the device of the invention comprises an emulation unit 12, defining the reducer means, and connected via electrical connections 12A to electrical connection lines 13 between the diesel control unit 4 and the injectors (or "diesel injectors") 2. This unit 12 senses and acquires the control signals for the diesel control unit 4 addressed to the diesel injectors 2 and provides the gas control unit 10 with the data relative to the gasoil injection times and in particular to the main injection time I which each injector is commanded to execute on the basis of the power required from the engine; the unit 12 also provides the gas control unit 10 with the number and position of the pilot injections.

On the basis of the data fed by the emulation unit to the gas control unit 10, this later processes the gasoil injection times and commands the emulation unit 12 to interrupt the operation of the diesel injectors 2 during an injection cycle subsequent to that in which the unit 12 has acquired the aforesaid gasoil injection time data and during at least the gasoil main injection I (and, in a possible variant, during at least one of the two pilot injections). This interruption takes place for a time defined by the current engine conditions (defined by its r.p.m., the gasoil pressure in the common header or rail - not shown - feeding the injectors 2 and the gasoil injection time) and by the reading of the data originating from the cooling fluid temperature and methane temperature sensors from the timing phase and from the methane velocity and pressure.

Said gasoil injection interruption results in a reduction in the total gasoil quantity fed during the entire main injection.

The gas control unit 10 commands the opening of the gas injectors 9 for a determined time to enable the engine to attain the same power and operating torque when fed by gasoil (less the tolerance acceptable by current regulations). More particularly, when dual fuel engine operation is activated, the gas control unit 10 commands the gas injectors 9 to inject a quantity of methane into the air intake manifold 8. This injection, which takes place for a time period indicated by the gas control unit 10, is such as to inject a quantity of gas (methane) sufficient to replace the gasoil quantity cut off, in order to attain the same power and the same torque in accordance with current regulations and according to user requirements. During the injection or cut-off in the gasoil main injection I (with consequent reduction in the quantity of this fuel fed into each cylinder) effected by the unit 12, the gas control unit 10 commands the unit 12 to generate along the lines 13 an electric signal directed to the diesel control unit 4 similar to that which the diesel injectors 2 usually generate during the main injection I and which is fed to said control unit to enable the diesel control unit 4 to verify their implementation for the necessary and required time period.

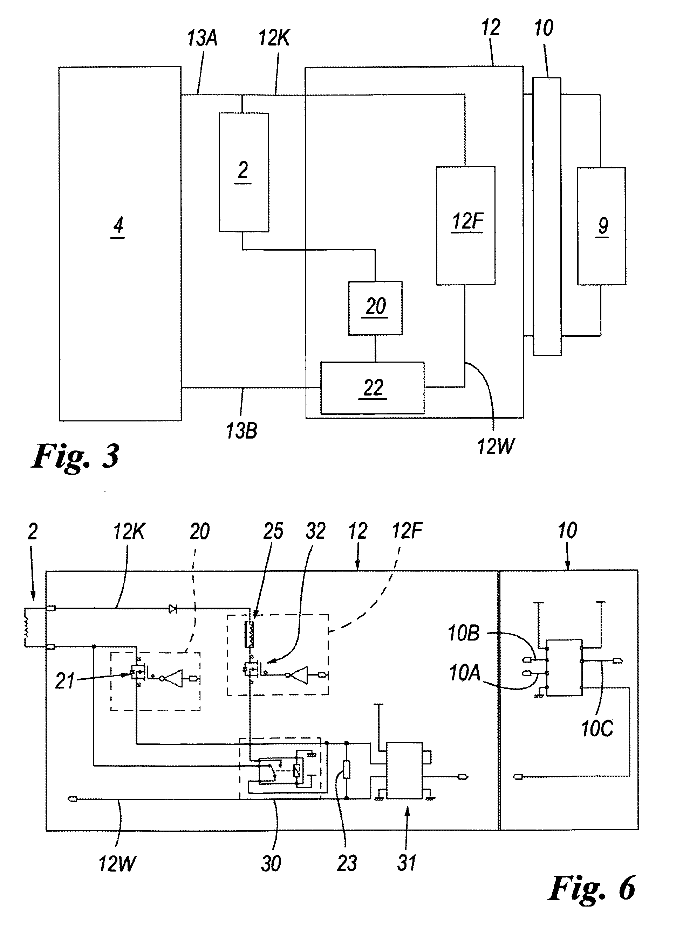

The electric signal generated by the emulation unit 12 "masks" the interruption in the operation of the diesel injectors 2 (the diesel control unit 4 sensing that they still operate in the required manner by obtaining this electric signal originating from said unit 12) and prevents this control unit from displaying a fault in the engine operation by entering a diagnostic phase and warning the user, who is using the vehicle on which the engine is mounted, that there is a fault in the engine feed. Each line 13 which connects the diesel control unit 4 to the injectors 2 comprises in reality a first branch 13A which starts from the control unit and terminates in the injector, and a second branch 13B which starts from the injection, passes into the emulation unit 12 presenting a change-over switch 20 for injection control (comprising, as visible for example in Figures 3 and 6, for example a controlled static switch 21) and a sensor 22 for sensing the direction of the electric signal (defined, as visible for example in Figure 6, for example by a resistor 23); the branch 13A then returns into control unit 4.

To the branch 13A a corresponding electrical connection is connected defined by an electrical branch 12K which starts from the branch 13A and terminates in an emulation member 12F; from this an electrical branch 12W extends to reach the aforesaid sensor 2. As visible, for example, in Figures 3 and 6, the unit 12 comprises a component 25 generating an electric signal for emulating the return signal to the control unit 4 generated by the injection 2 during normal gasoil operation of the diesel engine.

The purpose of the emulation unit connected to the gas control unit 10 and shown in Figure 6 is, as stated, to interrupt the current circulating through the injection and to provide the diesel control unit 4 with a current emulated by a load having characteristics similar to those of the gasoil injection 2. This unit comprises a circuit arrangement, already partly cited, which has three distinct modes of operation.
1. With the device of the invention not enabled and the engine at rest, the circuit of the unit 12 bypasses the gasoil injection interruption my means of a relay member 30 and provides the gas control unit 10 with the reading of the injection times via the integrated circuit 31; in this state, gasoil operation is ensured and gas injection is not activated.
2. During gasoil operation both the relay member 30 and the switch 21 are enabled.
3. During operation in emulation mode, the switch 21 is opened with simultaneous closure of a switch 32 which enables the connection between the branches 13A and 13B via the branches 12K and 12W.

Under any operating condition with gasoil, in emulation mode and with the system non-enabled, the injection time information is supplied to the gas control unit by the integrated circuit with a square signal.

Hence the control unit 10 is always able to recognize the injection time schedule and the duration of the main injection I. Hence when necessary and requested, it can suitably command and control the engine methane feed, this feed preferably and advantageously taking place in a suitable quantity during the intake phase of the engine 1 operating cycle. During this phase the gas, injected into the intake manifold 8, arrives in the cylinder where it joins the residual gasoil quantity injected into this latter.

Methane injection into the intake manifold 8 must be in advance of the gasoil injection interruption or cut-off. In that case the control unit 10 determines the gasoil quantity to be cut off in the next feed cycle, activates the gas injectors 9 to inject this latter into the manifold 8 and only after this gas injection does it reduce the quantity of gasoil injected by interrupting the operation of the injectors 2 during an injection phase (main and possibly also pilot).

In other words, the invention enables a quantity of the gasoil feed to be replaced with a suitable gas quantity for part of the time of a main injection I of fuel into a cylinder of the engine 1 and, in a variant, also for part of at least one pilot injection. The invention provides for interrupting this gasoil injection after it has begun (hence reducing the total gasoil quantity fed during an engine feed phase) and for replacing the cut-off gasoil with a quantity of methane gas such as to enable the engine to offer the required performance.

Replacing the injection of a gasoil quantity by injecting a suitable methane quantity takes place without the control unit 4 sensing any fuel variation. This is achieved by generating, along the branch 12W connected to the branch 13B, an electric signal corresponding to that which would have been present along this latter branch (13B) if there had not been any interruption in the operation of the diesel injection 2.

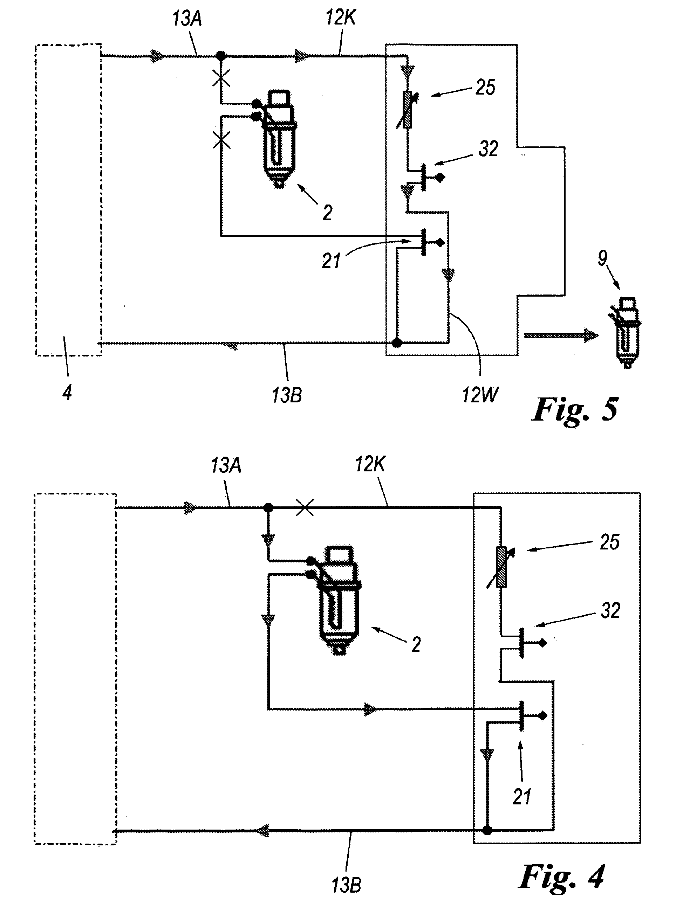

This interruption takes place by controlling the switch 21, which opens the connection between the switch and the branch 13B (see Figure 5 which schematically indicates this situation), said switch being controlled by the gas control unit 10 (see the output 10A of this latter). Simultaneously, this control unit 10 closes the switch 32 (via the control unit output 10B) which enables the current signal (or an electric signal in general) to be generated which, fed to the branch 12W, passes into the branch 13B to "emulate" the electric signal generated by the switch 2 and directed to the diesel control unit 4. The control unit 10 also commands that gas injection 9 corresponding to the deactivated diesel injection to feed a suitable gauged methane quantity into the corresponding intake manifold 8, by means of the output 10C of the control unit 10.

During operation with gasoil, the control unit 10 reads the injection time from the sensor 22 by reading the current circulating therethrough. The current is measured by the sensor 23 and fed to the control unit 10 in the form of a square wave signal. During the next engine feed phase, when dual fuel feed is required, the information regarding the injection time is controlled by the control unit 10 such as to reduce the gasoil percentage by a predefined quantity and to introduce the suitable gas quantity to be injected into the cylinder based on individual values following experimental analyses carried out on the engine aimed at obtaining the same performance (power and torque) obtained by gasoil feed alone without worsening pollutant emissions, in accordance with current regulations.

During the disabling of the gasoil injection 2, the gas control unit 10 implements emulation and controls the gas injection.

Figures 4 and 5 show respectively those situations in which gasoil is fed and in which there is interruption of the circuit branches towards the emulation unit 12 or towards the injection 2, corresponding respectively to feeding the engine with gasoil and with gasoil and gas mixture (dual fuel) respectively.

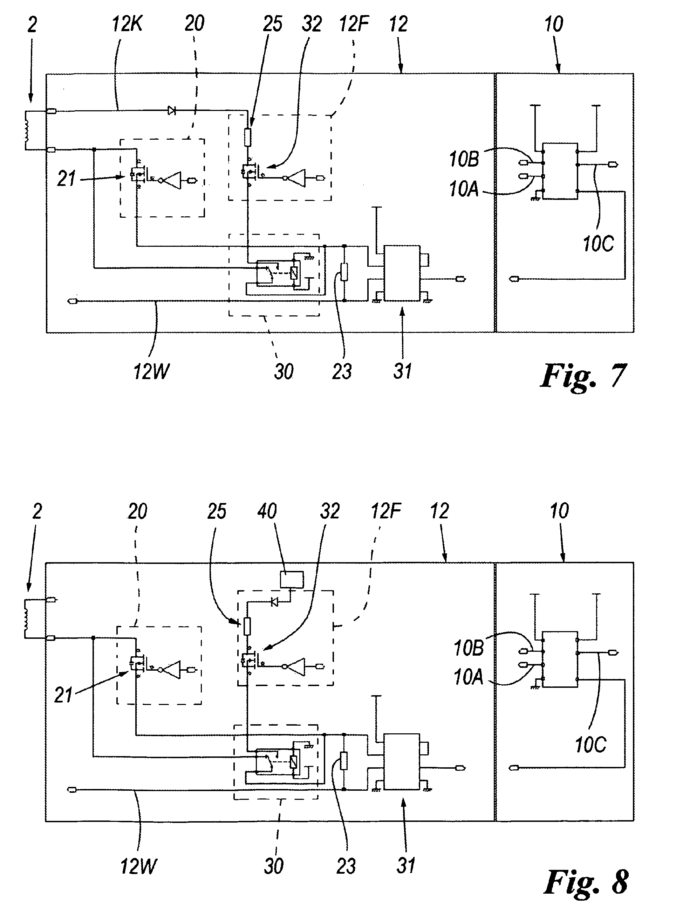

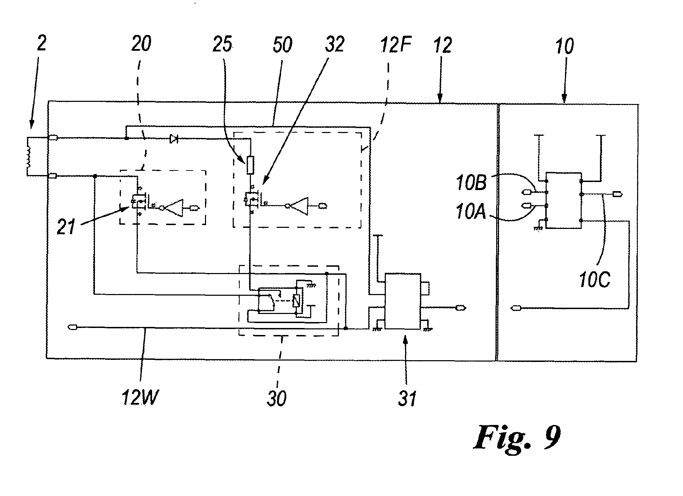

Figures 7, 8 and 9 show variants of the circuit defining the emulation unit 12. In the embodiment of Figure 6, the emulation current is obtained by means of an emulation component or member 25 defined by a coil. In Figure 7, this member is defined by an emulation resistance (or similar resistive component); in Figure 8, the emulation member is a resistive component or resistor connected to a battery 40. In Figure 9, this member 25 is a resistor or a coil; however the reconstruction of the gasoil injection time is obtained by measuring the injector control voltage through an electric branch 50 connected at one end to the injection and at the other end to the circuit 31.

Various embodiments have been described. Others are possible, such as one in which the unit 12 forms part of the gas control unit 10, and these are to be considered as falling within the scope of the following claims. In another variant, at least one chosen from the pilot injection (P1, P2) and the main injection (I) is modified; the purpose of this is to improve combustion in dual fuel operating mode. In a further variant, the gas injectors 9 are not connected to the manifold 8, but are arranged to inject the gas directly into the combustion chamber.

## Claims

1. A method for powering a diesel engine (1) with dual fuel feed, namely diesel fuel, i.e. fuel ignited by compression, and gas, in particular gasoil and methane, said engine (1) comprising a plurality of diesel electro-injectors (2) arranged to feed said fuel into corresponding cylinders, said diesel injectors (2) being activated and controlled in their operation by an electronic control unit (4) which supervises their operativity on the basis of predefined control parameters, the injection of this diesel fuel, for example gasoil, by each diesel injection (2) taking place in accordance with a modality which comprises at least one pilot injection (P1; P2) followed by a main gasoil injection (I) into the corresponding cylinder, **characterised by** reducing, at least during the main injection (I), the gasoil quantity injected and replacing the lacking gasoil quantity with a quantity of gas to enable correct engine operation while maintaining the requested power and torque values during use, during said reduction in the diesel fuel there being fed to the electronic control unit (4) controlling the diesel injectors (2) an electric signal which emulates the activation of these latter and masks the reduction in the gasoil quantity introduced into the cylinder in order to prevent said control unit (4) for said diesel injectors (2) from sensing said reduction.

2. A method as claimed in claim 1, **characterised by** also reducing the gasoil quantity during the pilot injection.

3. A method as claimed in claim 1 or 1 and 2, **characterised by** modifying the moment at which at least one chosen from the main injection and the pilot injection begins.

4. A method as claimed in claim 1, **characterised in that** the gas is injected in advance of the interruption of the gasoil injection of an injection cycle.

5. A method as claimed in claim 1, **characterised in that** during operation with gasoil and during activation of the diesel injectors (2) the time during which the main injection (I) is carried out is measured, said information being used to identify the engine operating point.

6. A method as claimed in claim 1, **characterised in that** during gas feed, electrical communication between each diesel injection (2) and the electronic control unit (4) is interrupted, and a unit (12) emulating the operation of said injectors is connected to this latter to generate the electric signal which emulates the operation of these latter injectors, said emulation unit (12) being connected to an electronic control unit (10) for controlling gas injectors (9) which are connected to a corresponding engine air manifold (8), or alternatively are arranged to feed gas directly into corresponding cylinders and to introduce the gas into said manifold or into the cylinders in a suitable quantity, as replacement for the gasoil quantity lacking.

7. A device for powering a diesel engine (1) with dual fuel feed, namely diesel fuel and gas, in particular gasoil and methane, said engine (1) comprising a plurality of diesel electro-injectors (2) arranged to feed said fuel, for example gasoil, into corresponding cylinders, said diesel injectors (2) being activated and controlled in their operation by an electronic control unit (4) which supervises their operativity on the basis of predefined control parameters, the gasoil injection by each diesel injection (2) taking place in accordance with a modality which comprises at least one pilot injection (P1; P2) followed by a main gasoil injection (I) into the corresponding cylinder means (9) for feeding gas to the engine (1) being provided, said means being controlled by corresponding command and control means (10), characterised that the means for feeding gas during the dual fuel feed mode are gas injectors (9), the command and control means for these latter being an electronic control unit (10), this latter interrupting operation of the diesel injectors (2) at least during the main gasoil injection (I) such as to reduce the quantity of this fuel fed into the cylinders, and replacing the lacking gasoil quantity with a quantity of gas such as to enable the engine to offer the required performance, an emulation unit (12) being provided electrically interposed between the control unit (4) for command and control of the diesel injectors (2) and these latter, said unit being arranged to generate an electric signal directed to said control unit (4) for the diesel injectors when the operation of these latter is interrupted, said signal masking this interruption and preventing said control unit (4) from sensing the interruption in gasoil injection into the cylinders.

8. A device as claimed in claim 7, **characterised in that** the gas injectors (9) are connected to a cylinder intake manifold and are activated in advance of the interruption in the operation of the diesel injectors.

9. A device as claimed in claim 7, **characterised in that** the emulation unit comprises at least one of the following characteristics:
- for each diesel injection (2) it presents a control member (20) defined by a change-over switch (21) arranged to interrupt the connection between said injection and the corresponding said control unit (4) when dual fuel feed mode is required;
- it comprises a member (31) for measuring the total injection times (I, P1, P2) of each diesel injection (2), said information being fed to the control unit (10) for controlling and commanding the gas injectors (9), said control unit (10) using said information to implement said gas injection into the engine feed cycle subsequent to that in which said information has been obtained;
- it comprises an emulation member (25) arranged to generate the electric signal directed to the control unit (4) which controls the injectors (2) and which masks its deactivation, said member being chosen from a coil and a resistive component, this latter being connected to the diesel injection (2) or to an electrical supply such as a battery (40), controlled by a static switch.

10. A device as claimed in claim 7, **characterised by** comprising at least one of the following further characteristics:
- the emulation unit (12) forms part of the control unit (10) commanding the gas injectors (9);
- said gas injectors (9) are associated directly with corresponding engine cylinders.

## Patentansprüche

1. Verfahren für den Antrieb eines Dieselmotors (1) mit zweifacher Zufuhr von Kraftstoff, und zwar Dieselkraftstoff, d. h. der Kraftstoff wird durch Kompression gezündet, und Gas, insbesondere Gasöl und Erdgas, wobei der Motor (1) eine Vielzahl an Dieselelektroinjektoren (2) umfasst, die angeordnet sind, um den Kraftstoff in entsprechende Zylinder zuzuführen, wobei die Dieselinjektoren (2) durch eine elektrische Steuereinheit (4) aktiviert und in ihrem Betrieb gesteuert werden, die deren Betrieb auf der Grundlage vorgegebener Kontrollparameter überwacht, wobei die Einspritzung dieses Dieselkraftstoffs, zum Beispiel Gasöl, durch einen jeden Dieselinjektor (2) in Übereinstimmung mit einem Modus stattfindet, der mindestens eine Piloteinspritzung (P1; P2), gefolgt von einer Hauptgasöleinspritzung (I), in den entsprechenden Zylinder umfasst, **gekennzeichnet durch** das Reduzieren der eingespritzten Gasölmenge und das Ersetzen der fehlenden Gasölmenge **durch** eine Gasmenge zumindest während der Haupteinspritzung (I), um den ordnungsgemäßen Motorbetrieb zu ermöglichen und dabei die erforderlichen Werte für Leistung und Drehmoment während der Verwendung aufrechtzuerhalten, wobei in die elektronische Steuereinheit (4), die die Dieselinjektoren (2) steuert, während dieser Reduzierung des Dieselkraftstoffs ein elektrisches Signal eingespeist wird, das deren Aktivierung emuliert und die Reduzierung der in den Zylinder eingeführten Gasölmenge tarnt, um zu verhindern, dass die Steuereinheit (4) für die Dieselinjektoren (2) diese Reduzierung erfasst.

2. Verfahren nach Anspruch 1, **dadurch gekennzeichnet, dass** die Gasölmenge auch während der Piloteinspritzung reduziert wird.

3. Verfahren nach Anspruch 1 oder 1 und 2, **dadurch gekennzeichnet, dass** der Zeitpunkt geändert wird, an dem mindestens entweder die Haupteinspritzung oder die Piloteinspritzung startet.

4. Verfahren nach Anspruch 1, **dadurch gekennzeichnet, dass** das Gas vor der Unterbrechung der Gasöleinspritzung eines Einspritzungszyklus eingespritzt wird.

5. Verfahren nach Anspruch 1, **dadurch gekennzeichnet, dass** die Zeit, während derer die Haupteinspritzung (I) durchgeführt wird, während des Betriebs mit Gasöl und während der Einspritzung der Dieselinjektoren (2) gemessen wird, wobei diese Informationen genutzt werden, um den Betriebspunkt des Motors zu identifizieren.

6. Verfahren nach Anspruch 1, **dadurch gekennzeichnet, dass** die elektrische Kommunikation zwischen einer jeden Dieseleinspritzung (2) und der elektronischen Steuereinheit (4) während der Gaszufuhr unterbrochen wird und eine Einheit (12), die den Betrieb der Injektoren emuliert, an diese angeschlossen wird, um das elektrische Signal zu generieren, das den Betrieb dieser Injektoren emuliert, wobei die Emulationseinheit (12) an eine elektronische Steuereinheit (10) zur Steuerung der Gasinjektoren (9) angeschlossen wird, die an ein entsprechende Motorluftventil (8) angeschlossen oder alternativ angeordnet sind, um Gas direkt in die entsprechenden Zylinder zuzuführen und das Gas in das Ventil oder in die Zylinder in einer geeigneten Menge als Ersatz für die fehlende Gasölmenge einzuführen.

7. Vorrichtung für den Antrieb eines Dieselmotors (1) mit zweifacher Zufuhr von Kraftstoff, und zwar Dieselkraftstoff und Gas, insbesondere Gasöl und Erdgas, wobei der Motor (1) eine Vielzahl an Dieselelektroinjektoren (2) umfasst, die angeordnet sind, um den Kraftstoff, beispielsweise Gasöl, in entsprechende Zylinder zuzuführen, wobei die Dieselinjektoren (2) durch eine elektrische Steuereinheit (4) aktiviert und in ihrem Betrieb gesteuert werden, die deren Betrieb auf der Grundlage vorgegebener Kontrollparameter überwacht, wobei die Gasöleinspritzung durch einen jeden Dieselinjektor (2) in Übereinstimmung mit einem Modus stattfindet, der mindestens eine Piloteinspritzung (P1; P2), gefolgt von einer Hauptgasöleinspritzung (I), in die entsprechenden Zylindermittel (9) umfasst, um dem bereitgestellten Motor (1) Gas zuzuführen, wobei diese Mittel durch entsprechende Kontroll- und Steuermittel (10) gesteuert werden, **dadurch gekennzeichnet, dass** die Gaszuführungsmittel während des zweifachen Zufuhrmodus Gasinjektoren (9) sind, wobei die Kontroll- und Steuermittel für diese durch eine elektronische Steuereinheit (10) dargestellt sind, die den Betrieb der Gasinjektoren (9) zumindest während der Hauptgasöleinspritzung (I) unterbricht, sodass die Menge dieses Kraftstoffs, die in die Zylinder zugeführt wird, reduziert und die fehlende Gasölmenge durch eine Gasmenge ersetzt wird, sodass der Motor in die Lage versetzt wird, die geforderte Leistung zu bieten, wobei eine Emulationseinheit (12) bereitgestellt ist, die elektrisch zwischen der Steuereinheit (4) zur Kontrolle und Steuerung der Dieselinjektoren (2) und den Letzteren eingesetzt ist, wobei diese Einheit angeordnet ist, um ein elektrisches Signal zu generieren, das der Steuereinheit (4) für die Dieselinjektoren zugeführt wird, wenn deren Betrieb unterbrochen wird, wobei dieses Signal diese Unterbrechung tarnt und verhindert, dass die Steuereinheit (4) die Unterbrechung der Gasöleinspritzung in die Zylinder erfasst.

8. Vorrichtung nach Anspruch 7, **dadurch gekennzeichnet, dass** die Gasinjektoren (9) an ein Zylindereinlassventil angeschlossen sind und vor der Unterbrechung des Betriebs der Dieselinjektoren aktiviert werden.

9. Vorrichtung nach Anspruch 7, **dadurch gekennzeichnet, dass** die Emulationseinheit mindestens folgende Eigenschaften umfasst:
- Für eine jede Dieseleinspritzung (2) weist sie ein Steuerelement (20) auf, definiert durch einen Umschalter (21), angeordnet, um die Verbindung zwischen der Einspritzung und der entsprechenden Steuereinheit (4) zu unterbrechen, wenn der zweifache Zufuhrmodus erforderlich ist;
- Sie umfasst ein Element (31) zum Messen der Gesamteinspritzungszeit (I, P1, P2) einer jeden Dieseleinspritzung (2), wobei diese Informationen in die Steuereinheit (10) eingespeist werden, um die Gasinjektoren (9) zu kontrollieren und zu steuern, wobei die Steuereinheit (10) diese Informationen nutzt, um die Gaseinspritzung in den Motorzufuhrzyklus zu implementieren, und zwar nach dem Zyklus, in dem die Informationen erhalten wurden;
- Sie umfasst ein Emulationselement (25), angeordnet, um das elektrische Signal zu generieren, das an die Steuereinheit (4) gerichtet ist und die Injektoren (2) steuert und deren Deaktivierung tarnt, wobei dieses entweder eine Spule oder ein Widerstandselement ist, wobei Letzteres an die Dieseleinspritzung (2) oder die Stromversorgung wie eine Batterie (40) angeschlossen wird, gesteuert durch einen statischen Schalter.

10. Vorrichtung nach Anspruch 7, **dadurch gekennzeichnet, dass** die Emulationseinheit mindestens eine der folgenden weiteren Eigenschaften umfasst:
- Die Emulationseinheit (12) bildet einen Teil der Steuereinheit (10), die die Gasinjektoren (9) steuert;
- Diese Gasinjektoren (9) sind direkt an die entsprechenden Motorzylinder angeschlossen.

## Revendications

1. Procédé pour fournir deux carburants à un moteur diesel (1), à savoir du diesel, c'est-à-dire du carburant enflammé par compression, et du gaz, en particulier du gasoil et du méthane, ledit moteur (1) comprenant une pluralité d'injecteurs électromagnétiques pour diesel (2) disposés pour fournir ledit carburant dans des cylindres correspondants, lesdits injecteurs pour diesel (2) étant actionnés et commandés lors de leur fonctionnement par une unité de commande électronique (4) qui supervise leur fonctionnement sur la base de paramètres de commande prédéfinis, l'injection de ce carburant diesel, par exemple du gasoil, par chaque injection de diesel (2) se déroulant selon une modalité qui comprend au moins une injection pilote (P1 ; P2) suivie par une injection principale de gasoil (I) dans le cylindre correspondant, **caractérisé en ce qu'**en réduisant, au moins lors de l'injection principale (I), la quantité de gasoil injectée et en remplaçant la quantité manquante de gasoil par une quantité de gaz permettant au moteur de fonctionner normalement tout en maintenant les valeurs de puissance et de couple requises lors de l'utilisation, lors de ladite réduction en carburant diesel, un signal électrique, étant alimenté à l'unité de commande électronique (4) commandant les injecteurs pour diesel (2), qui émule l'activation de ces derniers et masque la réduction de la quantité de gasoil introduite dans le cylindre afin d'empêcher ladite unité de commande (4) desdits injecteurs pour diesel (2) de détecter ladite réduction.

2. Procédé selon la revendication 1, caractérisé aussi par la réduction de la quantité de gasoil lors de l'injection pilote.

3. Procédé selon la revendication 1 ou 1 et 2, **caractérisé par** la modification du moment au cours duquel au moins l'injection principale ou l'injection pilote démarre.

4. Procédé selon la revendication 1, **caractérisé en ce que** le gaz est injecté avant l'interruption de l'injection de gasoil d'un cycle d'injection.

5. Procédé selon la revendication 1, **caractérisé en ce que** lors du fonctionnement avec le gasoil et lors de l'activation des injecteurs pour diesel (2), la durée durant laquelle l'injection principale (I) est effectuée est mesurée, ladite information étant utilisée pour identifier le point de fonctionnement du moteur.

6. Procédé selon la revendication 1, **caractérisé en ce que** lors de l'alimentation en gaz, la communication électrique entre chaque injection de diesel (2) et l'unité de commande électronique (4) est interrompue, et une unité (12) émulant le fonctionnement desdits injecteurs est reliée à cette dernière pour générer le signal électrique qui émule le fonctionnement desdits injecteurs, ladite unité d'émulation (12) étant reliée à une unité de commande électronique (10) destinée à contrôler les injecteurs de gaz (9) étant reliés à un manifold (8) d'air du moteur correspondant, ou alternativement, disposés pour alimenter directement les cylindres correspondants en gaz et pour introduire le gaz dans ledit manifold ou dans les cylindres dans une quantité appropriée, en remplacement de la quantité de gaz manquante.

7. Dispositif pour alimenter un moteur diesel (1) avec deux carburants, à savoir du carburant diesel et du gaz, en particulier du gasoil et du méthane, ledit moteur (1) comprenant une pluralité d'injecteurs électromagnétiques pour diesel (2) disposés pour fournir ledit carburant, par exemple du gasoil, dans des cylindres correspondants, lesdits injecteurs pour diesel (2) étant actionnés et commandés lors de leur fonctionnement par une unité de commande électronique (4) qui supervise leur fonctionnement sur la base de paramètres de commande prédéfinis, l'injection de gasoil, par chaque injection de diesel (2), se déroulant selon une modalité qui comprend au moins une injection pilote (P1 ; P2) suivie d'une injection principale de gasoil (I) dans des moyens à cylindre (9) correspondants, pour alimenter en gaz le moteur (1) étant fourni, lesdits moyens étant commandés par des moyens de commande et de contrôle (10) correspondants, **caractérisé en ce que** les moyens d'alimentation en gaz lors du mode d'alimentation à deux carburants sont des injecteurs de gaz (9), les moyens de commande et de contrôle ce ces derniers étant une unité de commande électronique (10), cette dernière interrompant le fonctionnement des injecteurs pour diesel (2) au moins pendant l'injection principale de gasoil (I) de manière à réduire la quantité de ce carburant fourni aux cylindres, et à remplacer la quantité de gasoil manquante par une quantité de gaz de manière à permettre au moteur d'offrir les performances requises, une unité d'émulation (12) étant prévue et interposée électriquement entre l'unité de commande (4) destinée à commander et à contrôler les injecteurs pour diesel (2) et ces derniers, ladite unité étant disposée pour générer un signal électrique dirigé vers ladite unité de commande (4) pour les injecteurs pour diesel lorsque le fonctionnement de ces derniers est interrompu, ledit signal masquant cette interruption et empêchant ladite unité de commande (4) de détecter l'interruption de l'injection de gasoil dans les cylindres.

8. Dispositif selon la revendication 7, **caractérisé en ce que** les injecteurs de gaz (9) sont reliés à une tubulure d'admission de cylindre et sont actionnés avant l'interruption, lors du fonctionnement, des injecteurs pour diesel.

9. Dispositif selon la revendication 7, **caractérisé en ce que** l'unité d'émulation comprend au moins une des caractéristiques suivantes :
- pour chaque injection de diesel (2), elle présente un organe de commande (20) défini par un commutateur (21) disposé pour interrompre la connexion entre ladite injection et ladite unité de commande correspondante (4) lorsque le mode d'alimentation à deux carburants est requis ;
- il comporte un organe (31) servant à mesurer les durées totales d'injection (I, P1, P2) de chaque injection de diesel (2), ladite information étant fournie à l'unité de commande (10) pour contrôler et commander les injecteurs de gaz (9), ladite unité de commande (10) utilisant ladite information pour mettre en oeuvre ladite injection de gaz dans le cycle d'alimentation du moteur après que ladite information ait été obtenue ;
- il comporte un organe d'émulation (25) prévu pour générer le signal électrique dirigé vers l'unité de commande (4) qui contrôle les injecteurs (2) et qui masque sa désactivation, ledit organe étant choisi entre une bobine et un composant résistif, ce dernier étant relié à l'injection de diesel (2) ou à une alimentation électrique telle qu'une batterie (40) commandée par un interrupteur statique.

10. Dispositif selon la revendication 7, **caractérisé en ce qu'**il comprend au moins une des autres caractéristiques suivantes :
- l'unité d'émulation (12) fait partie de l'unité de commande (10) commandant les injecteurs de gaz (9) ;
- lesdits injecteurs de gaz (9) étant directement associés aux cylindres du moteur correspondants.
